# EUROPEAN PATENT SPECIFICATION

(11) **EP 2 881 281 B1**
(45) Date of publication and mention of the grant of the patent: **01.07.2020**
(21) Application number: 13196004.9
(22) Date of filing: 06.12.2013
(51) Int. Cl.: B60P 3/42, B08B 9/093

(54) **Transport vehicle having a flexible fluid bag, and treatment means for treating the interior of the bag**
Transportfahrzeug mit flexiblem Flüssigkeitsbeutel, und Behandlungseinrichtung zur Behandlung der Innenseite des Beutels
Véhicule de transport comprenant un sac de fluide flexible et un moyen de traitement permettant de traiter l'intérieur du sac

(43) Date of publication of application: 10.06.2015
(73) Proprietor: Jerich, Herbert, 8200 Gleisdorf (AT)
(72) Inventor: Jerich, Herbert, 8200 Gleisdorf (AT)
(74) Representative: Nederlandsch Octrooibureau

(56) References cited:
- EP-A1- 2 221 214
- GB-A- 2 302 862
- US-A- 3 856 570
- US-A- 5 058 612
- US-A- 6 065 625
- US-A1- 2012 132 650

## Description

The invention is related to the field of transport vehicles which contain a flexible bag, such as a rubber bag, for transporting fluids. The bag is positioned in the load compartment of the transport vehicle and can be used for accommodating various cargo fluids, in particular liquids such as water, hydrocarbons, agricultural products such as wine etc. Furthermore, the load compartment of such transport vehicle may also be used in the traditional way for transporting general cargo such as packages. To that end, the empty bag is stowed away, for instance by rolling up or by lifting the empty bag into the top of the load space.

Thus, the flexibility of the transport vehicle is greatly increased, which offers the possibility to exploit the vehicle in a more rational way. As mentioned, the bag itself is suitable for containing various flowable goods, which would increase the flexibility of the vehicle even further. In this connection however it is pointed out that before switching from one type of cargo fluid to another, the interior of the bag should be thoroughly rinsed so as to avoid contamination. The process of treating the interior of the bag within the load space of the vehicle is however difficult to obtain having regard to the limited space available within the load compartment. Removal of the bag from the load compartment for the purpose of treating the interior thereof is however not feasible due to the overall size of the bag and the vulnerability thereof. Document US 2018/0132650 A1 discloses the preamble of the independent claims.

The object of the invention is therefore to provide a manner to treat the internal space of the flexible bag which is accommodated in the load space of a transport vehicle. This object is achieved by providing, in combination, a transport vehicle, comprising a chassis provided with wheels, a load compartment on said chassis and a load floor, longitudinal side walls which extend upwardly with respect to the load floor, a bulkhead at the front, at least one load door at the back and a roof, a closed flexible bag for containing a cargo fluid, said bag having a lower wall and an upper wall, said lower wall of the bag being supported in the load compartment and said upper wall of the bag being provided with at least one armature, lifting means associated with the load compartment for lifting the upper wall of the bag with respect to the lower wall thereof so as to create a free inner space in the bag, and treatment means comprising at least one treatment head which is to be mounted to the armature in communication with the free inner space of the bag, and a feed conduit connected to the treatment head for feeding a treatment medium to the free inner space of the bag.

By lifting the upper wall of the empty flexible bag, an open space is created in the interior thereof which makes the internal surfaces of the bag accessible for any treatment, such as a cleaning treatment. This lifting operation is carried out by means of the lifting devices which are arranged in the load compartment of the vehicle as well. Thus, after delivery of the fluid cargo at any location, it is possible to clean the interior of the bag and to subsequently load a different fluid cargo. The treatment means may be carried as well by the vehicle, thus enabling the operation thereof at any location which provides for instance a water intake point. Of course, other treatment fluids than water could be applied as well.

A thorough treatment of the interior of the bag can be obtained in case the treatment head comprises at least one rotatable nozzle. This treatment can be further enhanced in case the nozzle is rotatable around two mutually perpendicular axes. Thereby, it is ensured that the complete inner surfaces of the bag's interior are exposed to the swirling jet or jets which emanate from the nozzle(s). A further improvement of the treatment process is obtained in case multiple armatures are provided which are regularly spaced in the longitudinal direction of the load compartment. Such arrangement is in particular useful in case the bag has a relatively large longitudinal dimension, compared to the transverse dimensions thereof.

The armatures can be carried out in several ways; preferably, each armature comprises a ring member fixedly connected to the bag and a closure member. During transport, the closure member is screwed onto the ring member so as to close the flexible bag. As soon as the treatment operation is to be carried out, said closure member can be replaced by the treatment head. The closure member or cap can be connected to the ring by means of screw thread, although other arrangements such as with bayonet connection are possible as well, the treatment head having a similar arrangement.

The process of lifting the upper wall of the bag can be carried out in various ways. For instance, it would be possible to apply an internal overpressure, lifting the upper wall free from the lower wall. The inner space thus formed is readily accessible for the treatment fluid. The lifting means comprise attachment means, such as loops, mounted on the upper wall, as well as pull members, such as slings or ropes, which pull members are to be attached to the attachment means. The pull members make it possible to create an open internal space in the bag, while maintaining atmospheric pressure therein. Thus, the bag outlet may remain open during the treatment of the bag, in such a way that any fluid used together with any contaminants may leave the bag directly through the outlet.

Preferably, at least one series of attachment means is provided, said attachment means of a series being regularly spaced in the longitudinal direction of the load compartment. More preferably, two series of attachment means are arranged parallel to each other. A respective pull member is preferably arranged in the load compartment for each attachment means. The pull members may for instance each be wound on a respective winch element. Preferably, at least two winch elements are distributed along each longitudinal side wall and near the roof, each winch element being connected to a respective pull member.

As mentioned, the bag may comprise a flexible material, such as rubber or plastic. The bag may be provided with a cargo fluid valve for filling and emptying the bag, preferably at the aft end of the bag near the load doors. Also, the bag may have a vent for venting air or gas which is contained in the bag. For the purpose of stabilizing the bag with the load space, tie wraps may be provided which extend over the bag and the ends of which are connected to opposite longitudinal sides of the load compartment.

The invention is also related to a transport vehicle for use in the combination as described before, comprising a chassis provided with wheels, a load compartment on said chassis and a load floor, longitudinal side walls which extend upwardly with respect to the load floor, a bulkhead at the front, at least one load door at the back and a roof, a closed flexible bag for containing a cargo fluid, said bag having a lower wall and an upper wall, said lower wall of the bag being supported in the load compartment and said upper wall of the bag being provided with at least one armature, lifting means associated with the load compartment for lifting the upper wall of the bag with respect to the lower wall thereof so as to create a free inner space in the bag for the purpose of treating the inner space of the bag through the armature.

The invention will now be described further with respect to the embodiment shown in the drawings.
Figures 1-3 show a top view, a side view II and a back end view III respectively of the empty flexible bag.
Figure 4 show a view in perspective of the flexible bag in filled condition.
Figure 5 shows a view in perspective into the load compartment of a transport vehicle, the empty flexible bag being connected to pull members.
Figure 6 shows a view in perspective into the load compartment, the bag being in filled condition.
Figure 7 shows a cross section according to VII-VII of figure 5 of the flexible bag while the treatment of the interior space thereof is carried out.

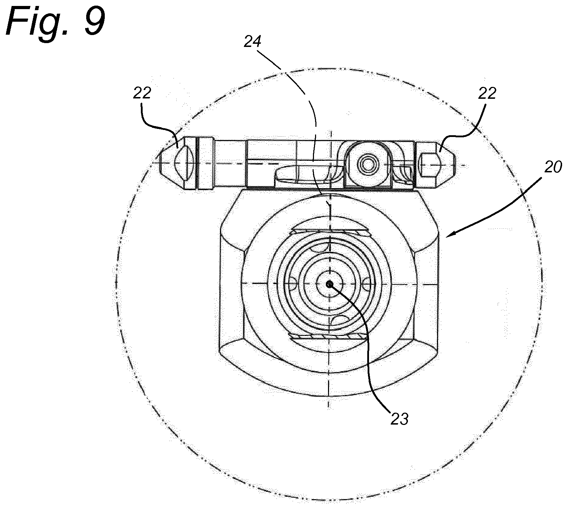

Figures 8, 9 show views on a treatment head.

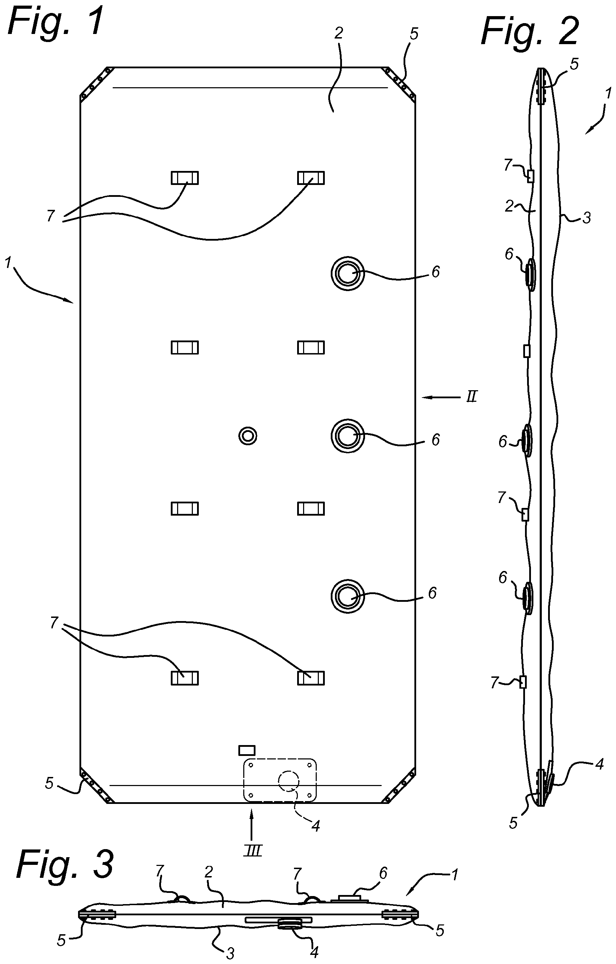

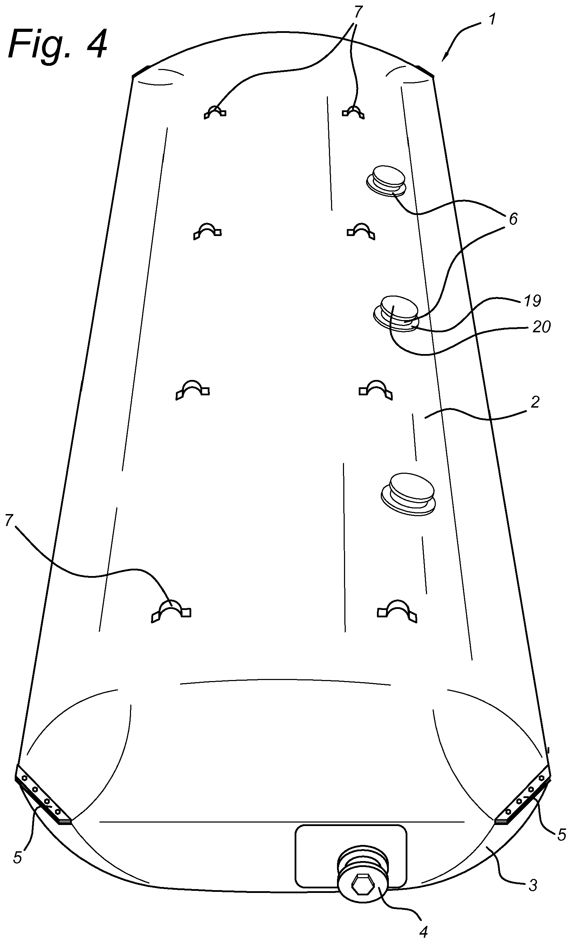

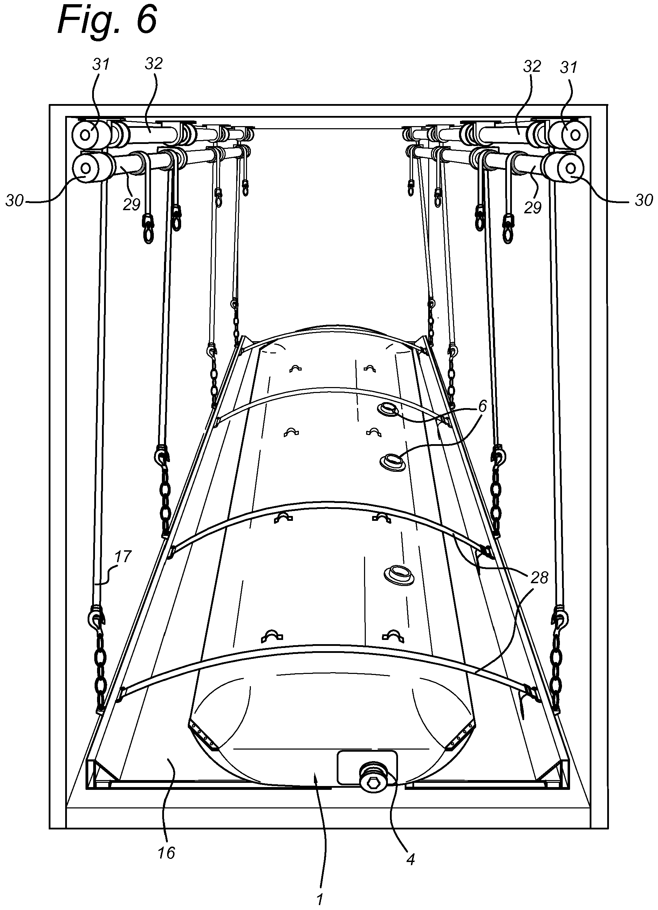

The flexible bag 1 as shown in figures 1-4 consists of rubber and has a top wall 2 and a bottom wall 3. Near the back end, the bottom wall 3 has a filling/emptying armature 4 for the cargo fluid. The corners of the bag 1 are equipped with compression pieces 5 between which the top wall 2 and the bottom wall 3 are clamped. The top wall 2 has armatures 6 as well as attachment loops 7. The armatures 6 consists of a metal ring 19 and a cap 20 which are provided with screw thread. Once the bag 1 has been filled, tie wraps 28 are applied so as to stabilize the bag 1 in the load compartment 8 as shown in figure 6.

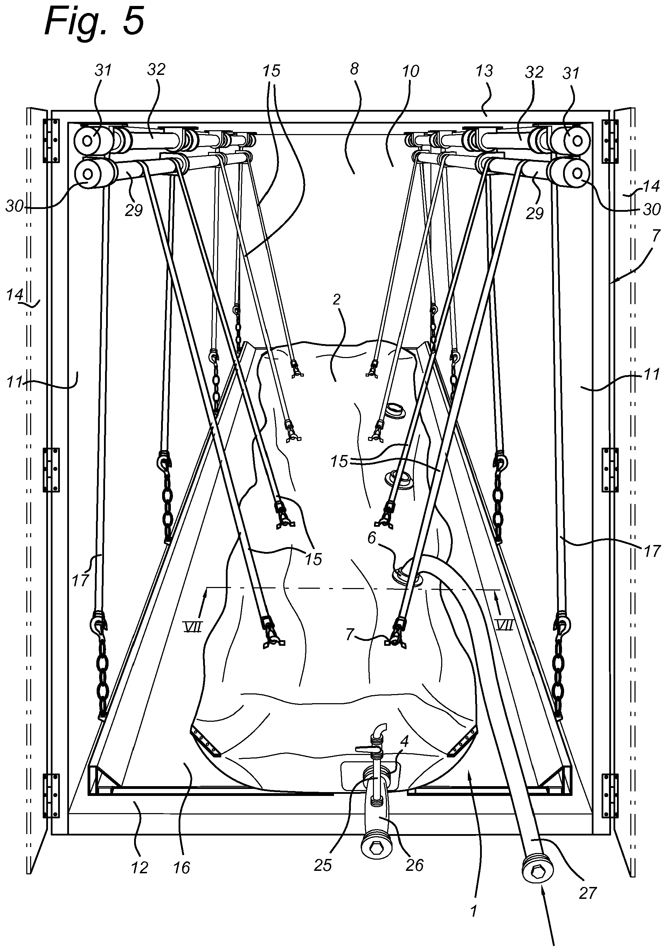

The bag 1 is accommodated within the load compartment 8 of the transport vehicle 9, in this case a trailer although other vehicle types can be used as well. The trailer 9 has a front bulkhead 10, side walls 11, a load floor 12 and a top wall 13. Near the back end, doors 14 are provided. In the embodiment shown, the flexible bag 1 is supported on a mezzanine floor 16 which is suspended from the slings 17. The slings are connected to the torsion rod 32, which can be rotated by means of the hydraulic motor 31. Thereby, the mezzanine floor 16 together with the flexible bag 1 can be raised from the lower position as shown in figure 5, into an upper position near the top wall 13. In the latter condition, the load floor is accessible for packed goods. It is however not always necessary to apply a mezzanine floor 16; it is also conceivable to arrange the flexible bag 1 on the load floor 12.

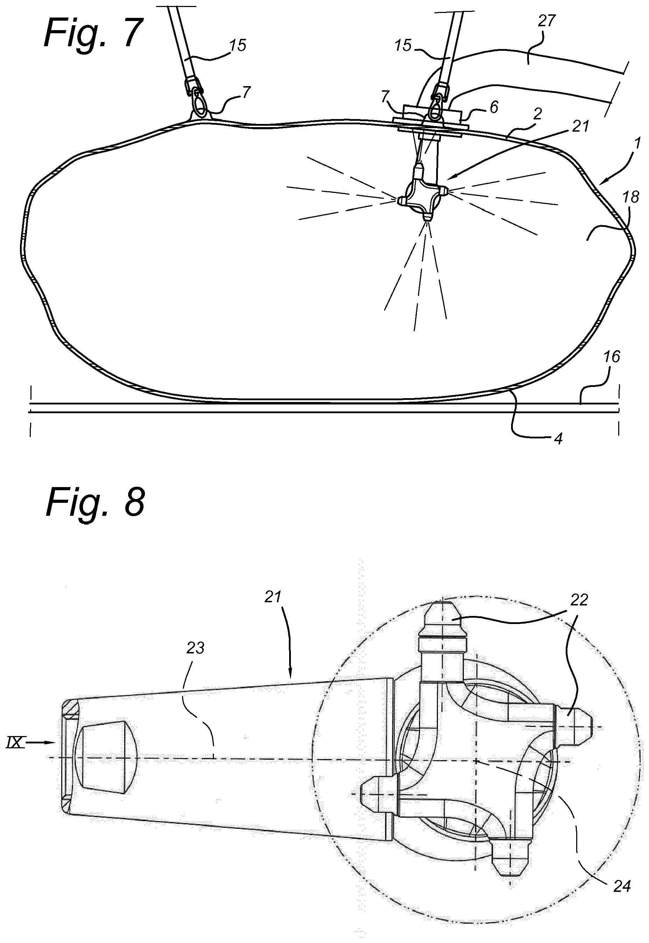

In the load compartment 8, pull members 15 are suspended from the upper part of said compartment. The pull members 15 are connected to the torsion rod 30, which can be rotated by means of the hydraulic motor 29. The pull members 15 are furthermore each attached to a respective attachment loop 7 on the upper wall 2 of the flexible bag 1. By rotating the torsion rod 29 through the hydraulic motor 29, the pull members 15 wound up and the upper wall 2 is lifted with respect to the lower wall 3 of the flexible bag 1. Thus, a free inner space 18 is created in the flexible bag 1 as shown in figure 7. The cap 20 have been remove from one of the rings 19, and a treatment head 21 has been screwed into the ring 19 instead as shown in figure 7.

The treatment head 21 comprises nozzles 22 which are offset with respect to the perpendicular rotation axes 23, 24, in such a way that the nozzles under the influence of the emanating jets are rotated about these axes. Thereby, a swirling motion of the jets is obtained which is favorable for exerting an intense treatment of the interior surfaces of the bag. During the process of treating the bag, the fluid is fed to the treatment head 21 through the feed hose 27 as shown in figures 5 and 7 and accumulates within the interior thereof. This fluid can be discharged through the pipe piece 26 connected for that purpose to the filling/emptying armature 4 as shown in figure 5. The pipe piece 26 carries a closeable vent 25, via which any gasses may be discharged from the bag.

### List of reference numerals

- 1.: Flexible bag
- 2.: Upper wall
- 3.: Lower wall
- 4.: Filling/emptying armature
- 5.: Clamp
- 6.: Armature
- 7.: Loop
- 8.: Load compartment
- 9.: Transport vehicle
- 10.: Front bulkhead
- 11.: Side wall
- 12.: Load floor
- 13.: Top wall
- 14.: Door
- 15.: Pulling member
- 16.: Mezzanine floor
- 17.: Sling
- 18.: Free inner space
- 19.: Screw ring
- 20.: Screw cap
- 21.: Treatment head
- 22.: Nozzle
- 23.: Rotation axis
- 24.: Rotation axis
- 25.: Vent
- 26: Pipe piece
- 27.: Feed hose
- 28.: Tie wrap
- 29.: Torsion rod
- 30.: Hydraulic motor
- 31.: Hydraulic motor
- 32.: Torsion rod

## Claims

1. In combination, a transport vehicle, comprising a chassis provided with wheels, a load compartment (8) on said chassis and a load floor (12), longitudinal side walls (11) which extend upwardly with respect to the load floor, a bulkhead (10) at the front, at least one load door (14) at the back and a roof (13), a closed flexible bag (1) for containing a cargo fluid, said bag having a lower wall (3) and an upper wall (2), said lower wall (3) of the bag (1) being supported in the load compartment (8) and said upper wall (2) of the bag being provided with at least one armature (6), lifting means (7, 15) associated with the load compartment (8), and treatment means for feeding a treatment medium to a free inner space of the bag, **characterized in that** the lifting means are configured for lifting the upper wall (2) of the bag (1) with respect to the lower wall thereof so as to create the free inner space (18) in the bag (1), wherein the lifting means comprise attachment means, such as loops (7), mounted on the upper wall (2), as well as pull members (15), such as slings or ropes, which pull members are to be attached to the attachment means **and in that** the treatment means comprise at least one treatment head (21) which is to be mounted to the armature (6) in communication with the free inner space (18) of the bag and a feed conduit (27) connected to the treatment head for feeding a treatment medium to the free inner space of the bag.

2. Combination according to claim 1, wherein the treatment head (21) comprises at least one rotatable nozzle (22).

3. Combination according to claim 2, wherein each nozzle (22) is rotatable around two mutually perpendicular axes.

4. Combination according to any of claims 1-3, wherein multiple armatures (6) are provided which are regularly spaced in the longitudinal direction of the load compartment (8).

5. Combination according to any of the preceding claims, wherein each armature (6) comprises a ring member (19) fixedly connected to the bag (1) and a closure member (20), and either said closure member (20) or the treatment head (21) being connected to the ring member.

6. Combination according to any of the preceding claims, wherein at least one series of attachment means (7) is provided, said attachment means of a series being regularly spaced in the longitudinal direction of the load compartment (8).

7. Combination according to claim 6, wherein two series of attachment means (7) are arranged parallel to each other.

8. Combination according to any of the preceding claims, wherein a respective pull member (15) is arranged in the load compartment (8) for each attachment means (7).

9. Combination according to any of the preceding claims, wherein an end of a pull member (15) is wound on a respective winch element (29).

10. Combination according to claim 9, wherein at least two winch elements (29) are distributed along each longitudinal side wall (11) and near the roof (13), each winch element being connected to a respective pull member.

11. Combination according to any of the preceding claims, wherein the bag (1) comprises a flexible material, such as rubber or plastic.

12. Combination according to any of the preceding claims, wherein the bag (1) is provided with a cargo fluid valve (4) for filling and emptying the bag.

13. Combination according to any of the preceding claims, wherein the treatment means has a vent (25) for venting air or gas which is contained in the bag (1).

14. Combination according to any of the preceding claims, wherein tie wraps (28) are provided which extend over the bag (1) and the ends of which are connected to opposite longitudinal sides of the load compartment (8).

15. Transport vehicle for use in the combination according to any of the preceding claims, comprising a chassis provided with wheels, a load compartment (8) on said chassis and a load floor (12), longitudinal side walls (11) which extend upwardly with respect to the load floor, a bulkhead (10) at the front, at least one load door (14) at the back and a roof (13), a closed flexible bag (1) for containing a cargo fluid, said bag having a lower wall (3) and an upper wall (2), said lower wall (3) of the bag (1) being supported in the load compartment (8) and said upper wall (2) of the bag being provided with at least one armature (6), lifting means (7, 15) associated with the load compartment (8), **characterized in that** the lifting means are configured for lifting the upper wall (2) of the bag (1) with respect to the lower wall thereof, so as to create a free inner space (18) in the bag (1) for the purpose of treating the inner space of the bag through the armature, wherein the lifting means comprise attachment means, such as loops (7), mounted on the upper wall (2), as well as pull members (15), such as slings or ropes, which pull members are to be attached to the attachment means.

## Patentansprüche

1. Kombination eines Transportfahrzeugs, welches ein Fahrgestell aufweist, welches mit Rädern versehen ist, weiter ein Ladeabteil (8) auf dem Fahrgestell und einem Ladeboden (12), Längsseitenwänden (11), die sich bezüglich des Ladebodens nach oben erstrecken, eine Trennwand (10) am Vorderteil, mindestens eine Ladetür (14) am Hinterteil und ein Dach (13), einen geschlossenen flexiblen Beutel (1) zum Halten eines Lastströmungsmittels, wobei der Beutel eine untere Wand (3) und eine obere Wand (2) hat, wobei die untere Wand (3) des Beutels (1) in dem Ladeabteil (8) getragen wird und die obere Wand (2) des Beutels mit mindestens einem Anschluss (6) versehen ist, mit Hubmitteln (7, 15), die mit dem Ladeabteil (8) assoziiert sind, und Behandlungsmitteln zum Einspeisen eines Behandlungsmediums zu einem freien inneren Raum des Beutels,
**dadurch gekennzeichnet, dass**
die Hubmittel konfiguriert sind, um die obere Wand (2) des Beutels (1) bezüglich seiner unteren Wand anzuheben, um den freien inneren Raum (18) in dem Beutel (1) zu erzeugen, wobei die Hubmittel Befestigungsmittel aufweisen, wie beispielsweise Schlaufen (7), die an der obere Wand (2) befestigt sind, sowie Zugglieder (15), wie beispielsweise Riemen oder Seile, wobei die Zugglieder vorgesehen sind, um an den Befestigungsmitteln befestigt zu werden, wobei die Behandlungsmittel zumindest einen Behandlungskopf (21) aufweisen, der an dem Anschluss (6) in Verbindung mit dem freien inneren Raum (18) des Beutels befestigt werden kann, und eine Einspeisungsleitung (27), die mit dem Behandlungskopf verbunden ist, um ein Behandlungsmedium in den freien inneren Raum des Beutels einzuspeisen.

2. Kombination nach Anspruch 1, wobei der Behandlungskopf (21) zumindest eine drehbare Düse (22) aufweist.

3. Kombination nach Anspruch 2, wobei jedes Düse (22) um zwei gegenseitig senkrechte Achsen drehbar ist.

4. Kombination nach einem der Ansprüche 1-3, wobei mehrere Anschlüsse (6) vorgesehen sind, die gleichmäßig in der Längsrichtung des Ladeabteils (8) beabstandet sind.

5. Kombination nach einem der vorhergehenden Ansprüche, wobei jeder Anschluss (6) ein Ringglied (19) aufweist, welches fest mit dem Beutel (1) verbunden ist, und ein Verschlussglied (20), und wobei entweder das Verschlussglied (20) oder der Behandlungskopf (21) mit dem Ringglied verbunden sind.

6. Kombination nach einem der vorhergehenden Ansprüche, wobei zumindest eine Reihe von Befestigungsmitteln (7) vorgesehen ist, wobei die Befestigungsmittel einer Reihe gleichmäßig in der Längsrichtung des Ladeabteils (8) beabstandet sind.

7. Kombination nach Anspruch 6, wobei zwei Reihen von Befestigungsmitteln (7) parallel zueinander angeordnet sind.

8. Kombination nach einem der vorhergehenden Ansprüche, wobei ein jeweiliges Zugglied (15) in dem Ladeabteil (8) für jedes Befestigungsmittel (7) angeordnet ist.

9. Kombination nach einem der vorhergehenden Ansprüche, wobei ein Ende eines Zuggliedes (15) auf einem jeweiligen Windenelement (29) aufgewickelt ist.

10. Kombination nach Anspruch 9, wobei zumindest zwei Windenelemente (29) entlang jeder Längsseitenwand (11) und nahe dem Dach (13) verteilt sind, wobei jedes Windenelement mit einem jeweiligen Zugglied verbunden ist.

11. Kombination nach einem der vorhergehenden Ansprüche, wobei der Beutel (1) ein flexibles Material aufweist, wie beispielsweise Gummi oder Plastik.

12. Kombination nach einem der vorhergehenden Ansprüche, wobei der Beutel (1) mit einem Lastströmungsmittelventil (4) zum Füllen und Leeren des Beutels versehen ist.

13. Kombination nach einem der vorhergehenden Ansprüche, wobei die Behandlungsmittel ein Entlüftungselement (25) zum Entlüften von Luft oder Gas, welche bzw. welches in dem Beutel (1) enthalten ist, haben.

14. Kombination nach einem der vorhergehenden Ansprüche, wobei Zurrbänder (28) vorgesehen sind, die sich über den Beutel (1) erstrecken, wobei die Enden davon mit gegenüberliegenden Längsseiten des Ladeabteils (8) verbunden sind.

15. Transportfahrzeug zur Verwendung in der Kombination nach einem der vorhergehenden Ansprüche, welches ein Fahrgestell aufweist, welches mit Rädern versehen ist, weiter ein Ladeabteil (8) auf dem Fahrgestell und einem Ladeboden (12), Längsseitenwände (11), die sich bezüglich des Ladebodens nach oben erstrecken, eine Trennwand (10) am Vorderteil, mindestens eine Ladetür (14) am Hinterteil und ein Dach (13), einen geschlossenen flexiblen Beutel (1) zum Aufnehmen eines Lastströmungsmittels, wobei der Beutel eine untere Wand (3) und eine obere Wand (2) hat, wobei die untere Wand (3) des Beutels (1) in dem Ladeabteil (8) getragen wird und wobei die obere Wand (2) des Beutels mit mindestens einem Anschluss (6) versehen ist, weiter Hubmittel (7, 15), die mit dem Ladeabteil (8) assoziiert sind, **dadurch gekennzeichnet, dass**
die Hubmittel konfiguriert sind, zum Anheben der oberen Wand (2) des Beutels (1) bezüglich seiner unteren Wand, um einen freien inneren Raum (18) in dem Beutel (1) zu erzeugen, und zwar zum Zwecke der Behandlung des inneren Raums des Beutels durch den Anschluss, wobei die Hubmittel Befestigungsmittel aufweisen, wie beispielsweise Schlaufen (7), die an der obere Wand (2) befestigt sind, genauso wie Zugglieder (15), wie beispielsweise Riemen oder Seile, wobei die Zugglieder zur Befestigung an den Befestigungsmitteln vorgesehen sind.

## Revendications

1. En combinaison, un véhicule de transport, comprenant un châssis muni de roues, un compartiment de chargement (8) sur ledit châssis et un plancher de chargement (12), des parois latérales longitudinales (11) s'étendant vers le haut par rapport au plancher de chargement, une cloison de séparation (10) à l'avant, au moins une porte de chargement (14) à l'arrière et un toit (13), un sac souple fermé (1) destiné à contenir un fluide de chargement, ledit sac comportant une paroi inférieure (3) et une paroi supérieure (2), ladite paroi inférieure (3) du sac (1) étant supportée dans le compartiment de chargement (8) et ladite paroi supérieure (2) du sac étant pourvue d'au moins une armature (6), des moyens de levage (7, 15) associés au compartiment de chargement (8), et des moyens de traitement destinés à amener un milieu de traitement dans un espace intérieur libre du sac, **caractérisés en ce que** les moyens de levage sont configurés pour soulever la paroi supérieure (2) du sac (1) par rapport à la paroi inférieure de celui-ci de manière à créer l'espace intérieur libre (18) dans le sac (1), les moyens de levage comprenant des moyens de fixation, tels que des boucles (7), montés sur la paroi supérieure (2), ainsi que des éléments de traction (15), tels que des élingues ou des cordes, lesquels éléments de traction sont destinés à être attachés aux moyens de fixation, les moyens de traitement comprenant au moins une tête de traitement (21) qui est destinée à être montée sur l'armature (6) en communication avec l'espace intérieur libre (18) du sac et un conduit d'alimentation (27) relié à la tête de traitement pour alimenter l'espace intérieur libre du sac avec un milieu de traitement.

2. Combinaison selon la revendication 1, dans laquelle la tête de traitement (21) comprend au moins une buse rotative (22).

3. Combinaison selon la revendication 2, dans laquelle chaque buse (22) peut tourner autour de deux axes perpendiculaires l'un à l'autre.

4. Combinaison selon l'une quelconque des revendications 1 à 3, dans laquelle plusieurs armatures (6) sont prévues qui sont espacées régulièrement dans la direction longitudinale du compartiment de chargement (8).

5. Combinaison selon l'une quelconque des revendications précédentes, dans laquelle chaque armature (6) comprend un élément annulaire (19) relié de manière fixe au sac (1) et un élément de fermeture (20), et ledit élément de fermeture (20) ou la tête de traitement (21) étant relié à l'élément annulaire.

6. Combinaison selon l'une quelconque des revendications précédentes, dans laquelle au moins une série de moyens de fixation (7) est prévue, lesdits moyens de fixation d'une série étant espacés régulièrement dans la direction longitudinale du compartiment de chargement (8).

7. Combinaison selon la revendication 6, dans laquelle deux séries de moyens de fixation (7) sont disposées parallèlement l'une à l'autre.

8. Combinaison selon l'une quelconque des revendications précédentes, dans laquelle un élément de traction respectif (15) est disposé dans le compartiment de chargement (8) pour chaque moyen de fixation (7).

9. Combinaison selon l'une quelconque des revendications précédentes, dans laquelle une extrémité d'un élément de traction (15) est enroulée sur un élément de treuil respectif (29).

10. Combinaison selon la revendication 9, dans laquelle au moins deux éléments de treuil (29) sont répartis le long de chaque paroi latérale longitudinale (11) et à proximité du toit (13), chaque élément de treuil étant relié à un élément de traction respectif.

11. Combinaison selon l'une quelconque des revendications précédentes, dans laquelle le sac (1) comprend un matériau flexible, tel que du caoutchouc ou du plastique.

12. Combinaison selon l'une quelconque des revendications précédentes, dans laquelle le sac (1) est muni d'une vanne de fluide de chargement (4) destinée à remplir et vider le sac.

13. Combinaison selon l'une quelconque des revendications précédentes, dans laquelle le moyen de traitement comporte un évent (25) destiné à évacuer l'air ou le gaz contenu dans le sac (1).

14. Combinaison selon l'une quelconque des revendications précédentes, dans laquelle des attaches (28) sont prévues qui s'étendent par-dessus le sac (1) et dont les extrémités sont raccordées aux côtés longitudinaux opposés du compartiment de chargement (8).

15. Véhicule de transport destiné à être utilisé en combinaison selon l'une quelconque des revendications précédentes, comprenant un châssis muni de roues, un compartiment de chargement (8) sur ledit châssis et un plancher de chargement (12), des parois latérales longitudinales (11) s'étendant vers le haut par rapport au plancher de chargement, une cloison de séparation (10) à l'avant, au moins une porte de chargement (14) à l'arrière et un toit (13), un sac souple fermé (1) destiné à contenir un fluide de chargement, ledit sac comportant une paroi inférieure (3) et une paroi supérieure (2), ladite paroi inférieure (3) du sac (1) étant supportée dans le compartiment de chargement (8) et ladite paroi supérieure (2) du sac étant pourvue d'au moins une armature (6), des moyens de levage (7, 15) associés au compartiment de chargement (8), **caractérisé en ce que** les moyens de levage sont configurés pour soulever la paroi supérieure (2) du sac (1) par rapport à la paroi inférieure celui-ci, de manière à créer un espace intérieur libre (18) dans le sac (1) afin de traiter l'espace intérieur du sac à travers l'armature, dans lequel les moyens de levage comprennent des moyens de fixation, tels que des boucles (7), montés sur la paroi supérieure (2), ainsi que des éléments de traction (15), tels que des élingues ou des cordes, qui sont destinés à être fixés aux moyens de fixation.
